# EUROPEAN PATENT SPECIFICATION

(11) **EP 1 948 510 B1**
(45) Date of publication and mention of the grant of the patent: **15.04.2009**
(21) Application number: 06806541.6
(22) Date of filing: 25.10.2006
(51) Int. Cl.: B64D 13/06

(54) **ARRANGEMENT FOR SUPPLYING HUMIDIFIED AMBIENT AIR FOR AN AIRCRAFT**
ANORDNUNG ZUR ZUFÜHRUNG BEFEUCHTETER UMGEBUNGSLUFT FÜR EIN FLUGZEUG
SYSTEME PERMETTANT D'ALIMENTER UN AERONEF EN AIR AMBIANT HUMIDIFIE

(30) Priority: 17.11.2005 DE 102005054886
(43) Date of publication of application: 30.07.2008
(73) Proprietor: Airbus Deutschland GmbH, 21129 Hamburg (DE)
(72) Inventor: SCHERER, Thomas, 22559 Hamburg (DE); BAMMANN, Holger, 21614 Buxtehude (DE)
(74) Representative: Katérle, Axel
(86) International application number: PCT/EP2006/010290
(87) International publication number: WO 2007/057094

(56) References cited:
- EP-A- 1 755 950
- US-A- 5 037 585
- US-A- 5 278 937
- US-A- 6 099 404
- US-A1- 2005 072 776
- US-B1- 6 375 849

## Description

The invention relates to an arrangement for supplying humidified ambient air for an aircraft.

In modern passenger and cargo aircraft it is customary to install a humidifying system, by means of which the relative humidity of the ambient air in the aircraft interior may be increased to values of for example 20 to 30% or even higher. The relative atmospheric humidity in the aircraft interior is an important parameter for the well-being of the passengers and crew. If the interior air is too dry, the persons on board may for example develop dry mucous membranes and itchiness of the eyes. However, particularly at high altitudes the outside air does not contain enough moisture for the relative atmospheric humidity required for pleasant ambient conditions to be provided in the aircraft without forced humidification. Depending on the number of persons on board, the ambient temperature and the design of the aircraft interior, in the absence of forced humidification the relative atmospheric humidity on board is normally markedly below 20%, often even below 10%.

From US 6,099,404, which constitutes the closest prior art, a humidifying system for aircraft is known, which comprises an evaporator, in which water is evaporated by means of a heat exchanger. The heat exchanger is supplied with hot air, which is removed from a hot-air main circuit of an air-conditioning system for temperature control of the aircraft cabin. The hot air passes through the heat exchanger and then mixes with the resulting steam. The steam flow thus produced is fed back into the air-conditioning system. In the aircraft cabin, suitable sensor equipment measures the ambient temperature, the relative atmospheric humidity and the air pressure. From these measured values an electronic control unit determines the dew point temperature for the cabin and controls a flow valve, which determines the flow rate of the hot air to the evaporator, in such a way that the cabin dew point temperature remains substantially constant at a defined value.

US 2005/072776 A1 discloses a humidification system for use in commercial aircraft, which comprises an evaporating device supplying steam into a steam supply line which opens into a supply air line leading to a cabin of the aircraft. A pressure regulator valve is disposed in the steam supply line.

WO 2005/110844 A1 discloses a humidification apparatus which ejects a conditioning fluid into an aircraft cabin from one or more outlet nozzles. The conditioning fluid contains water which is sprayed in very close spatial relationship with the outlet nozzle. The energy needed for evaporation of the sprayed water is provided through a sufficiently high temperature of the water and/or an airflow which in one embodiment entrains the water to the outlet nozzle.

It is an object of the present invention to provide a humidifying system for the inside air of an aircraft that is simple and rugged yet operates with adequate precision.

To achieve the above object, the present invention provides an arrangement for supplying humidified ambient air for an aircraft in accordance with claim 1. Preferred embodiments of the invention are given in the dependent sub-claims.

The arrangement for supplying humidified ambient air for an aircraft according to the invention comprises:
- a first line arrangement, which brings up supply air and from which the supply air is blown into the aircraft interior,
- an evaporating device, which supplies a steam flow, the pressure of which corresponds at least approximately to a predetermined pressure value lying above a requisite interior pressure of the aircraft,
- a second line arrangement, which carries the steam flow and opens into the first line arrangement, and
- an, in particular adjustable, aperture arrangement disposed in the second line arrangement for lowering the pressure of the steam flow.

The first line arrangement comprises one supply-air line branch associated with each of a plurality of individual temperature-controllable interior zones of the aircraft and the second line arrangement comprises a plurality of steam-flow line branches, which open out each into one of the supply-air line branches and are supplied from a common steam-flow collecting line that carries the generated steam flow from the evaporating means. The aperture arrangement in said case comprises one, in particular individually adjustable, aperture in each of the steam-flow line branches. In this form of construction, by means of the various apertures an individual adjustability of the quantity of humidity introduced into each of the interior zones is provided.

The solution according to the invention enables effective humidification of the ambient air in the aircraft, wherein the defined pressure of the steam flow and the aperture arrangement allow a sufficiently precisely metered steam quantity and/or a sufficiently precisely metered quantity of a steam-air mixture to be introduced into the interior. Costly sensor equipment for measuring ambient temperature, relative atmospheric humidity and air pressure in the interior is dispensable with the solution according to the invention.

The evaporating device may comprise a heat exchanger arrangement supplied with hot air for the evaporation of water contained in an evaporation tank. In particular, the evaporating device for generating the steam flow may mix the resulting steam with at least some of the hot air. The hot air may be diverted from an existing hot-air circuit of the aircraft. In particular, it is conceivable that this diverted hot air is already available at a substantially constant pressure that corresponds approximately to the predetermined pressure of the steam flow. It is however also conceivable that the evaporating device itself supplies the hot air in that it heats up cold air by means of an electric heating device and at the same time guarantees a requisite defined pressure of the air thus heated.

In an alternative form of construction, the evaporating device comprises electric heating means for the direct heating and bringing to evaporation of water contained in an evaporation tank. In this form of construction, the water is heated until a requisite pressure of the steam in the evaporation tank is attained. To keep the steam pressure constant, a regulation of the water temperature is conceivable.

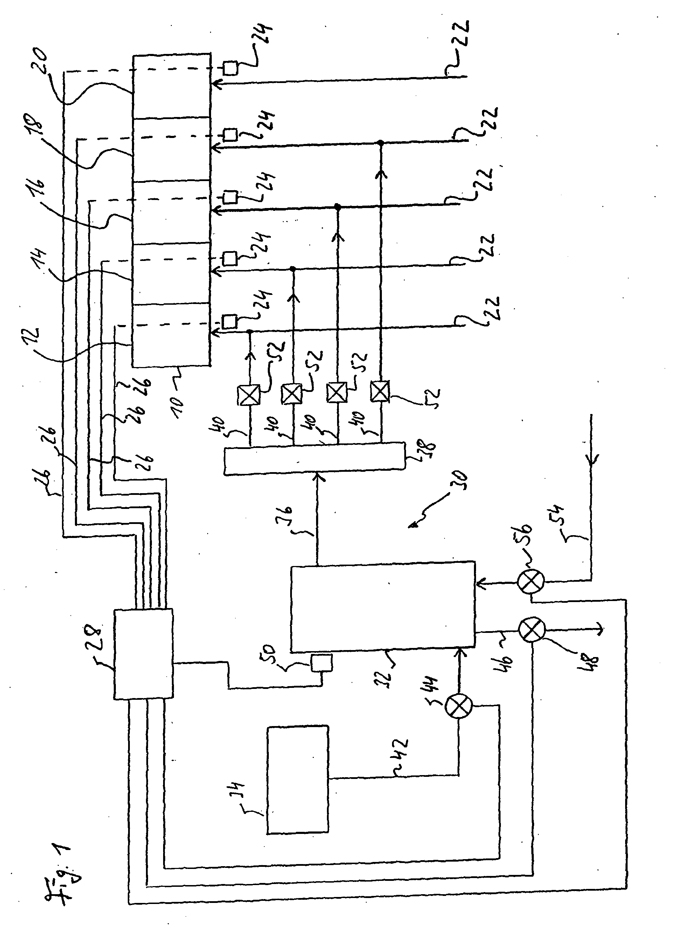

The invention is described in detail below with reference to the accompanying single drawing. The Fig. 1 shown there diagrammatically represents an embodiment of an arrangement according to the invention for supplying humidified ambient air for an aircraft.

In this figure, 10 denotes an aircraft cabin that is subdivided into a plurality of (in the illustrated example, five) cabin zones 12, 14, 16, 18, 20. Each of these cabin zones is individually air-conditioned, wherein suitably temperature-controlled supply air is brought up and blown into each air-conditioned zone by means of a respective supply-air line branch 22. It is self-evident that the supply air brought along a supply-air line branch 22 may be blown into the relevant air-conditioned zone via a plurality of injection nozzles, although this is not represented in Figure 1. The temperature of the supply air to be injected is measured in each supply-air line branch 22 by means of a temperature sensor 24, which supplies its measured value via an electric signal line 26 to an electronic control unit 28. In dependence upon the measured injection air temperatures and optionally in dependence upon further measured quantities, the control unit 28 in an as such known manner regulates the temperature of the supply air brought up by the supply-air line branch 22 in such a way that in the cabin zones 12-20 a setpoint temperature of the ambient air arises that is individually definable for each air-conditioned zone.

For forced humidification of the supply air injected into the cabin zones 12-20 a humidifying system generally denoted by 30 is used, comprising an evaporator 32, which evaporates water fed to it from a water tank 34 and generates a steam flow, which is carried away along a steam-flow collecting line 36 emanating from the evaporator 32. The steam-flow collecting line 36 is connected to a distributor 38, from which emanate steam-flow line branches 40 that are individually associated with at least some of the cabin zones 12-20. In the illustrated example, a total of four steam-flow line branches 40 are provided, which are associated with the cabin zones 12, 14, 16, 18. Each steam-flow line branch opens into the supply-air line branch 22 associated with the relevant cabin zone at a point lying upstream of the temperature sensor 24 that measures the injection air temperature in the respective supply-air line branch. Via the steam-flow line branches 40 the supply air brought up in the supply-air line branches 22 is enriched with additional moisture, thereby resulting in a corresponding increase of the relative humidity in the relevant cabin zones. It is self-evident that such forced humidification may be provided for all cabin zones. In this case, there would also be a further steam-flow line branch 40 emanating from the distributor 38 and opening into the supply-air line branch associated with the cabin zone 20.

Installed in an inlet line 42 connecting the water tank 34 to the evaporator 32 is a valve 44, which is controllable by the electronic control unit 28 and by means of which the supply of water into the evaporator 32 is controllable. An outlet line 46, in which a further valve 48 is installed, allows a controlled discharge of water from the evaporator 32. The valve 48 is also controllable by the electronic control unit 28. A level sensor 50 measures the level of the water in the evaporator 32 and supplies a corresponding measured value to the electronic control unit 28. In dependence upon the measured filling height, the control unit 28 controls the water supply valve 44.

The evaporator 32 supplies the generated steam flow along the collecting line 36 approximately at a predetermined pressure, which lies above a desired interior pressure in the cabin 10 and/or in the individual cabin zones 12-20. For example, the evaporator 32 may generate the steam flow approximately at a pressure of 1000 mbar. An aperture 52 installed in each of the steam-flow line branches 40 effects a pressure reduction from the higher pressure level prevailing along the collecting line 36 to a lower pressure level, wherein the apertures 52 allow individual adjustment of the pressure reduction for each of the steam-flow line branches 40. Thus, for each of the cabin zones 12-18 where forced humidification is to occur it is possible individually to adjust the moisture quantity introduced in each case. Preferably, the apertures 52 effect a pressure reduction to a level that corresponds approximately to the cabin internal pressure desired in the relevant cabin zone. For flights at greater altitude, the desired cabin pressure is for example generally slightly below atmospheric pressure, for example approximately 750 mbar. The apertures 52, which may have a non-adjustable aperture diameter or may take the form of adjustable throttles or valves, may then in dependence upon the desired moisture content in the cabin zones 12-18 bring about a pressure reduction to for example likewise approximately 750 mbar or to values slightly above that, for example 800 mbar.

Although it is fundamentally conceivable for the apertures 52 to be adjustable and to be capable of adjustment by means of the electronic control unit 28 while the aircraft is in flight, in a preferred form of construction it is provided that prior to the start of a routine flight the apertures 52 are calibrated and then no longer changed. In a calibration phase it is possible, for example in the course of successive tests, to establish which aperture size is needed to achieve a desired relative humidity in the specific cabin zone.

The evaporator 32 may for example be of a design such as is disclosed in US 6,099,404 for the component denoted by 1 in the figures thereof. The evaporator 32 may accordingly contain a heat exchanger, which is supplied with hot air, the thermal energy of which is utilized to evaporate the water contained in the evaporator 32. The hot air is introduced in the bottom region of the evaporator 32 through a hot-air feed line 54, flows through the heat exchanger and mixes in the top region of the evaporator 32 with the resulting steam, so that the steam flow carried in the collecting line 36 is a steam-air mixture. In the hot-air feed line 54 a flow valve 56 may be installed, by means of which the flow of hot air into the evaporator 32 is controllable. Control of this flow valve 56 may be effected likewise by the electronic control unit 28.

The hot air available along the hot-air feed line 54 may be diverted from a hot-air circuit of the aircraft that exists independently of the humidifying system 30. In this case, it may be for example engine extraction air, trim air or recirculated air. Conventional air-conditioning systems for aircraft, including those without forced humidification, carry one or more of these types of air in their hot-air circuit.

It may even be that the existing hot-air circuit of the aircraft supplies hot air at a pressure suitable for the humidifying system, i.e. for example a pressure of approximately 1000 mbar. In this case, it is possible to dispense with separate pressure regulation of the available hot air as part of the functionality of the humidifying system 30. Should hot air be available at a sufficiently high pressure, which is however significantly above the desired pressure in the collecting line 36, it is also conceivable to lower the supplied hot air to the desired pressure by means of a suitable pressure reduction organ and introduce the hot air thus reduced in pressure into the evaporator 32. The pressure reduction organ may be a conventional pressure relief valve. The flow valve 56 shown in Figure 1 may, if need be, also be used for purposeful reduction of the pressure of the supplied hot air.

It is also conceivable to provide pressure-measuring means, which measure the pressure of the supplied hot air or/and the pressure in the collecting line 36, wherein the electronic control unit 28 in dependence upon the measured pressure controls a pressure control element disposed in the hot-air feed line 54, for example in the form of the valve 56, in such a way that the measured pressure corresponds to a desired setpoint pressure.

As a modification for the utilization of already existing hot air of the aircraft, it is conceivable for the humidifying system 30 to comprise electric heating means (not represented in detail) in order to produce the hot air needed for water evaporation by heating cold air. The heating of cold air may occur for example in a separate heating chamber, which is connected by the hot-air feed line 54 to the evaporator 32. Alternatively, the heating means may be disposed along the feed line 54 so that cold air carried in the line 54 is heated on its way to the evaporator 32. It is equally possible for the cold air to be heated only in the evaporator 32 in a heating space provided therein. By means of a pressure relief valve or a pressure regulation circuit leading via the control unit 28, the pressure of the air introduced into the heat exchanger of the evaporator 32 may likewise be adjusted in such a way that the desired defined pressure above the requisite cabin pressure prevails in the collecting line 36.

It is even conceivable to dispense with a heat exchanger and with the use of hot air and, instead, heat the water in the evaporator 32 by means of suitable electric heating means. In such a form of construction, the resulting steam is not mixed with hot air. The steam flow in the collecting line 36 accordingly comprises substantially exclusively water vapour. Here too, by means of a pressure relief valve arrangement or a pressure regulating circuit it may be guaranteed that the water vapour released in the collecting line 36 has a desired high pressure of for example approximately 1000 mbar.

## Claims

1. Arrangement for supplying humidified ambient air for an aircraft, comprising
- a first line arrangement (22), which brings up supply air and from which the supply air is blown into the aircraft interior (10),
- an evaporating device (32), which supplies a steam flow, the pressure of which corresponds at least approximately to a predetermined pressure value lying above a requisite interior pressure of the aircraft,
- a second line arrangement (36, 38, 40), which carries the steam flow and opens into the first line arrangement (22), and
- an, in particular adjustable, aperture arrangement (52) disposed in the second line arrangement (36, 38, 40) for lowering the pressure of the steam flow, wherein the first line arrangement (22) comprises one supply-air line branch (22) associated with each of a plurality of individually air-conditioned interior zones (12-18) of the aircraft, the second line arrangement (36, 38, 40) comprises a plurality of steam-flow line branches (40), which open each into one of the supply-air line branches (22) and are supplied from a common steam-flow collecting line (36) that carries the generated steam flow from the evaporating device, and the aperture arrangement comprises one, in particular individually adjustable, aperture (52) in each of the steam-flow line branches (40).

2. Arrangement according to claim 1,
**characterized in that** the evaporating device (32) comprises a heat exchanger arrangement supplied with hot air for the evaporation of water contained in an evaporation tank.

3. Arrangement according to claim 2,
**characterized in that** the evaporating device (32) for generating the steam flow mixes the generated water vapour with at least some of the hot air.

4. Arrangement according to claim 1,
**characterized in that** the evaporating device (32) comprises electric heating means for the heating and bringing to evaporation of water contained in an evaporation tank.

## Patentansprüche

1. Anordnung zur Bereitstellung befeuchteter Raumluft für ein Flugzeug, umfassend
- eine Versorgungsluft heranführende erste Leitungsanordnung (22), aus welcher die Versorgungsluft in den Flugzeuginnenraum (10) eingeblasen wird,
- eine Verdampfungseinrichtung (32), welche einen Dampfstrom bereitstellt, dessen Druck zumindest näherungsweise einem vorbestimmten, über einem angestrebten Innenraumdruck des Flugzeugs liegenden Dampfwert entspricht,
- eine den Dampfstrom führende zweite Leitungsanordnung (36, 38, 40), welche in die erste Leitungsanordnung (22) mündet, und
- eine in der zweiten Leitungsanordnung (36, 38, 40) angeordnete, insbesondere einstellbare Blendenanordnung (52) zur Absenkung des Drucks des Dampfstroms,
wobei die erste Leitungsanordnung (22) in Zuordnung zu jeder von mehreren individuell klimatisierbaren Innenraumzonen (12-18) des Flugzeugs einen Versorgungsluft-Leitungsstrang (22) umfasst, wobei die zweite Leitungsanordnung (36, 38, 40) eine Mehrzahl in je einen der Versorgungsluft-Leitungsstränge (22) mündender Dampfstrom-Leitungsstränge (40) umfasst, welche aus einer gemeinsamen, den erzeugten Dampfstrom von der Verdampfungseinrichtung abführenden Dampfstrom-Sammelleitung (36) gespeist sind, und wobei die Blendenanordnung in jedem der Dampfstrom-Leitungsstränge (40) eine insbesondere einzeln einstellbare Blende (52) umfasst.

2. Anordnung nach Anspruch 1,
**dadurch gekennzeichnet, dass** die Verdampfungseinrichtung (32) eine mit Heißluft gespeiste Wärmetauscheranordnung zur Verdampfung in einem Verdampfungsbehälter enthaltenen Wassers umfasst.

3. Anordnung nach Anspruch 2,
**dadurch gekennzeichnet, dass** die Verdampfungseinrichtung (32) zur Erzeugung des Dampfstroms den entstehenden Wasserdampf mit wenigstens einem Teil der Heißluft mischt.

4. Anordnung nach Anspruch 1,
**dadurch gekennzeichnet, dass** die Verdampfungseinrichtung (32) elektrische Heizmittel umfasst, um in einem Verdampfungsbehälter enthaltenes Wasser zu erhitzen und zur Verdampfung zu bringen.

## Revendications

1. Agencement pour amener de l'air ambiant humidifié pour un avion, comprenant
- un agencement de première conduite (22) qui amène de l'air d'alimentation et duquel l'air d'alimentation est soufflé dans l'intérieur (10) de l'avion,
- un dispositif d'évaporation (32) qui amène un flux de vapeur, la pression duquel correspond au moins approximativement à une valeur de pression prédéterminée située au-dessus d'une pression intérieure requise de l'avion,
- un agencement de deuxième conduite (36, 38, 40) qui transporte le flux de vapeur et s'ouvre dans l'agencement de première conduite (22), et
- un agencement d'ouverture (52), en particulier ajustable, disposé dans l'agencement de deuxième conduite (36, 38, 40) pour abaisser la pression du flux de vapeur,
dans lequel l'agencement de première conduite (22) comprend une conduite secondaire (22) d'air d'alimentation associée à chacune d'une pluralité de zones intérieures (12-18) climatisées individuellement de l'avion, l'agencement de deuxième conduite (36, 38, 40) comprend une pluralité de conduites secondaires (40) de flux de vapeur qui s'ouvrent chacune dans l'une des conduites secondaires (22) d'air d'alimentation et sont alimentées à partir d'une conduite commune (36) de collecte de flux de vapeur qui transporte le flux de vapeur généré du dispositif d'évaporation, et l'agencement d'ouverture comprend une ouverture (52), en particulier individuellement ajustable, dans chacune des conduites secondaires (40) de flux de vapeur.

2. Agencement selon la revendication 1,
**caractérisé en ce que** le dispositif d'évaporation (32) comprend un agencement d'échangeur de chaleur alimenté en air chaud pour l'évaporation de l'eau contenue dans une cuve d'évaporation.

3. Agencement selon la revendication 2,
**caractérisé en ce que** le dispositif d'évaporation (32) pour générer le flux de vapeur mélange la vapeur d'eau générée avec au moins une partie de l'air chaud.

4. Agencement selon la revendication 1,
**caractérisé en ce que** le dispositif d'évaporation (32) comprend un moyen de chauffage électrique pour chauffer et amener à évaporation l'eau contenue dans une cuve d'évaporation.
